# EUROPÄISCHE PATENTANMELDUNG

(11) **EP 1 468 962 A1**
(43) Veröffentlichungstag der Anmeldung: **20.10.2004**
(21) Anmeldenummer: 04005553.5
(22) Anmeldetag: 09.03.2004
(51) Int. Cl.: C01G 1/02

(54) **Domänen in einer Metalloxid-Matrix**

(30) Priorität: 14.04.2003 DE 10317067
(71) Anmelder: Degussa AG, 40474 Düsseldorf (DE)
(72) Erfinder: Gottfried, Heiko, 61137 Schöneck (DE); Katusic, Stipan, 65779 Kelkheim (DE); Krämer, Michael, 61137 Schöneck (DE); Pridöhl, Markus, Dr., 63538 Grosskrotzenburg (DE); Wombacher, Willibald, 63867 Johannesberg (DE); Zimmermann, Guido, 63454 Hanau (DE)

(57) **Zusammenfassung**

Komposit-Pulver mit einer Matrix-Domänenstruktur, wobei
- die Matrix ein Metalloxid ist und in Form von dreidimensionalen Aggregaten, die mindestens in einer Dimension einen Durchmesser von nicht mehr als 250 nm aufweisen, vorliegt, die Domänen aus Metalloxiden und/oder Edelmetallen in der Matrix eines einzelnen Metalloxides bestehen, wobei die Domänen aus
   - wenigstens zwei Metalloxiden oder
   - wenigstens zwei Edelmetallen oder
   - einem Gemisch aus mindestens einem Metalloxid und mindestens einem Edelmetall bestehen, und
   - nanoskalig sind, und wobei
   das Kompositpulver eine volumenspezifische Oberfläche von 60 bis 1200 m²/cm³ aufweist. Es wird hergestellt indem man die Precursoren der Oxide der Matrix und der Domänen, entsprechend dem später gewünschten Verhältnis, mit einem Gasgemisch enthaltend ein Brenngas und Sauerstoff vermischt und in einem Reaktor, bestehend aus einer Verbrennungszone und einer Reaktionszone zur Reaktion bringt, die heißen Gase und das feste Produkte kühlt und anschliessend von den Gasen abtrennt. Es kann als Werkstoff für magnetische, elektronische oder optische Anwendungen eingesetzt werden.

## Beschreibung

Die Erfindung betrifft ein Komposit-Pulver mit einer Matrix-Domänenstruktur, seine Herstellung und Verwendung.

Ein Problem bei der Herstellung von nanoskaligen Materialien rührt daher, dass die während einer Reaktion ursprünglich gebildeten sehr kleinen Cluster, in der Größenordnung von ca. 1 bis ca. 100 nm, die Tendenz aufweisen zu größeren Einheiten zu aggregieren. Dadurch wird die Energie die aus dem hohen Oberflächen/Volumen-Verhältnis herrührt verringert. Damit werden aber auch die besonderen größenabhängigen elektronischen, optischen, magnetischen und chemischen Eigenschaften dieser Cluster verringert oder gänzlich eliminiert.

Die Stabilisierung solcher Cluster kann in einer polymeren, organischen Matrix gelingen. Dabei werden die Cluster von der Matrix umschlossen und dadurch an einer Aggregation gehindert. Die so umhüllten Cluster werden auch als Domänen bezeichnet.

Dies wird beispielsweise in US 4474866 beschrieben. Eine polymere Matrix, beispielsweise ein synthetisches Ionenaustauscherharz, dient dazu um nanoskaliges Fe₂O₃ zu stabilisieren. Dabei wird das Harz mit Eisenionen beladen, die Eisenionen nachfolgend in Fe₂O₃ überführt und das Fe₂O₃beladene Harz anschliessend getrocknet. Nachteilig hierbei ist, dass das Harz in der Regel noch vermahlen werden muss um ein mikronisiertes Pulver zu erhalten. Es ist schwierig durch diesen Mahlprozess ein nanoskaliges Pulver zu erhalten. Nachteilig ist ferner die geringe thermische Stabilität der organischen Matrix und der langwierige Herstellprozess. Weitere Dokumente, in welchen die Stabilisierung von Domänen mittels einer organische Matrix beschrieben werden, sind beispielsweise US 4101435, US 4873102 oder US 6048920.

Neben organischen Materialien können auch Metall- oder Metalloidoxide als Matrixmaterial dienen.

US 5316699 beschreibt die Herstellung superparamagnetischer Domänen in einer dielektrischen Matrix durch ein Sol-Gel-Verfahren und die nachfolgende reduzierende Behandlung mit Wasserstoff. Die erhaltenen Partikel weisen ein Netzwerk von miteinander verbundenen Poren auf, in denen sich die magnetische Komponente befindet. Nachteilig bei der Herstellung mittels Sol-Gel-Verfahren ist die in der Regel langwierige Herstellung der Partikel, die bis zu mehreren Wochen dauern kann, sowie die notwendige Nachbehandlung mit Wasserstoff bei unwirtschaftlich hohen Temperaturen. Ferner können die Partikel Verunreinigungen aus den Ausgangsmaterialien sowie Neben- und Zersetzungsprodukte aus den weiteren Reaktionsschritten enthalten.

Zachariah et al. (Nanostruct. Mater. 5, 383, 1995; J. Mater. Res. 14, 4661, 1999) beschreiben die Herstellung von Nanomaterialien durch Flammenoxidation. Als Matrix dient beispielsweise Siliciumdioxid und die Domänen bestehen aus Eisenoxiden oder Titandioxid.

Der Stand der Technik beschreibt Kompositpartikel mit Matrix-Domänenstrukturen mit Metalloxiden als Domänen und einer Matrix aus einem organischen Material oder einem Metalloxid. Dabei weisen zwar die Domänen Nanoskaligkeit auf, die Matrix hingegen ist oft deutlich gröber, so dass die gewünschten nanoskaligen Kompositpartikel erst durch weitere Mahlschritte erhalten werden.

Wünschenswert wäre ein Pulver, welches mehrere der besonderen Eigenschaften von nanoskaligen Pulvern vereint.

Aufgabe der Erfindung ist es daher Kompositpulver mit einer solchen Kombination von Eigenschaften bereitzustellen. Weiterhin ist es Aufgabe der Erfindung ein Verfahren zur Herstellung dieser Kompositpartikel bereitzustellen, bei dem keine weiteren Mahlschritte nötig sind um nanoskalige Kompositpartikel zu erhalten.

Die Aufgabe wird gelöst durch ein Komposit-Pulver mit einer Matrix-Domänenstruktur, dadurch gekennzeichnet, dass
die Matrix ein Metalloxid ist und in Form von dreidimensionalen Aggregaten, die mindestens in einer Dimension einen Durchmesser von nicht mehr als 250 nm aufweisen, vorliegt,
die Domänen aus Metalloxiden und/oder Edelmetallen in der Matrix eines einzelnen Metalloxides
bestehen, wobei die Domänen aus
wenigstens zwei Metalloxiden oder
- wenigstens zwei Edelmetallen oder
- einem Gemisch aus mindestens einem Metalloxid und mindestens einem Edelmetall bestehen, und nanoskalig sind, und wobei
das Kompositpulver eine volumenspezifische
Oberfläche von 60 bis 1200 m²/cm³ aufweist.

Unter Matrix-Domänenstruktur sind Strukturen von räumlich voneinander getrennten Domänen in einer Matrix zu verstehen.

Unter Aggregat im Sinne der Erfindung sind dreidimensionale Strukturen von verwachsenen Primärpartikeln zu verstehen. Primärpartikel im Sinne der Erfindung sind die bei der Oxidationsreaktion in einer Flamme primär gebildeten Partikel. Aufgrund der hohen Reaktionstemperaturen sind diese weitgehend porenfrei. Mehrere Aggregate können sich zu Agglomeraten verbinden. Diese Agglomerate lassen sich leicht wieder trennen. Im Gegensatz hierzu ist die Zerlegung der Aggregate in die Primärpartikel in der Regel nicht möglich.

Die Aggregate können nur aus dem Oxid der Matrix oder dem Oxid einer oder mehrerer Domänen oder deren Mischformen in einer Matrix bestehen.

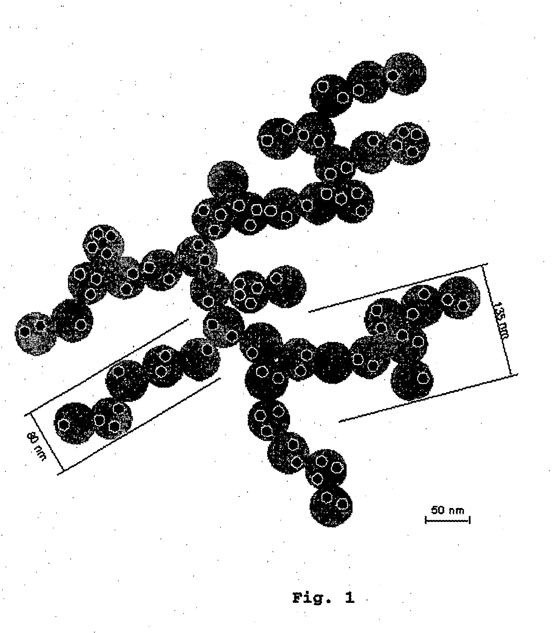

Ein Primärpartikel kann Anteile des Oxides der Matrix und Anteile des Oxides einer Domäne enthalten. Die dreidimensionale Aggregatstruktur des erfindungsgemäßen Pulvers weist wenigstens in einer Raumrichtung einen Umfang von nicht mehr als 250 nm auf (Fig. 1).

Die volumenspezifische Oberfläche des erfindungsgemäßen Pulvers liegt zwischen 60 und 1200 m²/cm³. Eine vorteilhafte Ausführungsform kann eine volumenspezifische Oberfläche zwischen 100 und 800 g/cm³ aufweisen.

Die Domänen des erfindungsgemäßen Pulvers sind nanoskalige Domänen. Hierunter sind Domänen mit einem Durchmesser zwischen 2 und 50 nm zu verstehen. Diese weisen wenigstens zwei unterschiedliche Metalloxide, zwei unterschiedliche Edelmetalle oder ein Gemisch aus mindestens einem Metalloxid und mindestens einem Edelmetall auf. Dabei können die unterschiedlichen Metalloxide oder Edelmetalle in verschiedenen Domänen vorliegen oder sie können sich innerhalb einer Domäne befinden. Auch sind Mischformen möglich in denen ein Teil der Metalloxide in verschiedenen Domänen vorliegt, ein anderer Teil dagegen Domänen mit zwei Metalloxiden aufweist. Die möglichen Anordnungen mit 2 Metalloxiden als Domänen sind beispielhaft in Fig. 2A-D dargestellt, wobei gilt: M = Matrix, D1 = Domäne bestehend aus Metalloxid 1, D2 = Domäne Metalloxid 2, D1+2 = Domäne bestehend aus Metalloxid 1 und Metalloxid 2.

Unterschiedlich sind die Metalloxide dann, wenn die Metalloxide unterschiedliche Metalle tragen, beispielsweise Indium und Zinn.

Im Sinne der Erfindung zählen auch Metalloidoxide, wie beispielsweise Siliciumdioxid, zu den Metalloxiden.

Weiterhin können im erfindungsgemäßen Pulver die Matrix und/oder die Domänen amorph und/oder kristallin vorliegen. So kann die Matrix oder eine Domäne beispielsweise aus amorphem Siliciumdioxid oder aus kristallinem Titandioxid bestehen.

Die Domänen des erfindungsgemäßen Pulvers können von der umgebenden Matrix vollständig oder nur teilweise umschlossen sein. Teilweise umschlossen heißt, daß einzelne Domänen aus der Oberfläche eines Aggregates herausragen. Bevorzugt kann eine Ausführungsform sein, bei der die Domänen vollständig von der Matrix umschlossen sind. So weist ein erfindungsgemäßes Pulver mit kristallinen Titandioxid-Domänen, welche vollständig von einer amorphen Siliciumdioxid-Matrix umgeben sind, besonders vorteilhafte UV-A- und UV-B- Absorption bei geringer photokatalytischer Aktivität auf.

Das Verhältnis, bezogen auf das Gewicht, von Domänen zu Matrix ist nicht beschränkt, so lange Domänen, also räumlich voneinander getrennte Bereiche vorliegen. Bevorzugt können Pulver mit einem Verhältnis, bezogen auf das Gewicht, von Domänen zu Matrix 1:99 bis 90:10 aufweisen.

Die Matrix und die Domänen des erfindungsgemäßen Pulvers können bevorzugt die Oxide von Li, Na, K, Rb, Cs, Be, Mg, Ca, Sr, Ba, Sc, Y, La, Ce, Pr, Nd, Sm, Eu, Gd, Tb, Ti, Zr, Hf, V, Nb, Ta, Cr, Mo, W, Mn, Fe, Co, Ni, Cu, Ag, Zn, Cd, Hg, B, Al, Ga, In, Te, Se, Tl, Si, Ge, Sn, Pb, P, As, Sb, Bi aufweisen.

Besonders bevorzugt können die Oxide von Na, K, Mg, Ca, Y, Ce, Ti, Zr, V, Nb, Mo, W, Mn, Fe, Co, Ni, Ag, Zn, Al, In, Si, Sn, Sb, Bi sein.

Ganz besonders bevorzugt können die Oxide von Ti, Zr, Fe, Co, Ni, Zn, Al, In, Si, Sn sein.

Weiterhin können die Domänen die Edelmetalle Au, Pt, Rh, Pd, Ru, Ir, Ag, Hg, Os, Re umfassen.

Besonders bevorzugt können erfindungsgemäße Pulver eine Matrix aus den Oxiden von Ti, Al, Si, Zr und Domänen aus einem oder mehreren Oxiden von Fe, Co, Ni, In, Sn den aufweisen.

Bevorzugt kann ein erfindungsgemäßes Pulver sein, bei dem
- die Matrix aus Siliciumdioxid ist und
- die Domänen aus Indiumoxid, Zinnoxid und/oder Mischmetalloxidformen von Indium und Zinn bestehen,
- wobei der Anteil an Indiumoxid, gerechnet als In₂O₃ und bezogen auf die Summe von Indiumoxid und Zinnoxid, grechnet als SnO₂, von 80 bis 98 Gew.-%, und
- der Anteil an Siliciumdioxid, bezogen auf die Summe aus Siliciumdioxid + Indiumoxid + Zinnoxid, 10 bis 99 Gew.-% beträgt.

Weiterhin kann ein erfindungsgemäßes Pulver bevorzugt sein, bei dem
- die Matrix aus Siliciumdioxid ist und
- die Domänen aus Manganoxid, Eisenoxid und/oder Mischmetalloxidformen von Eisen/Mangan bestehen,
- wobei der Anteil an Eisenoxid, gerechnet als Fe₂O₃ und bezogen auf die Summe von Eisenoxid und Manganoxid, grechnet als MnO, 36 bis 99 Gew.-% beträgt, und der Anteil an Siliciumdioxid, bezogen auf die Summe aus Siliciumdioxid + Eisenoxid + Manganoxid, 10 bis 99 Gew.-% beträgt.

Weiterhin kann ein erfindungsgemäßes Pulver bevorzugt sein, bei dem
- die Matrix Siliciumdioxid ist,
- die Domänen aus Manganoxid, Eisenoxid, Zinkoxid und/oder Mischmetalloxidformen von Eisen/Mangan oder Eisen/Zink oder Mangan/Zink bestehen, wobei
- mit einem Anteil an Eisenoxid, gerechnet als Fe₂O₃, von 32 bis 98 Gew.-% Manganoxid, gerechnet als MnO, von 1 bis 64 Gew.-% Zinkoxid, gerechnet als ZnO, 1 bis 67 Gew.-%, jeweils bezogen auf die Summe von Eisenoxid, Manganoxid und Zinkoxid, und
- der Anteil an Siliciumdioxid, bezogen auf die Summe aus Siliciumdioxid + Eisenoxid + Manganoxid + Zinkoxid, 10 bis 99 Gew.-% beträgt.

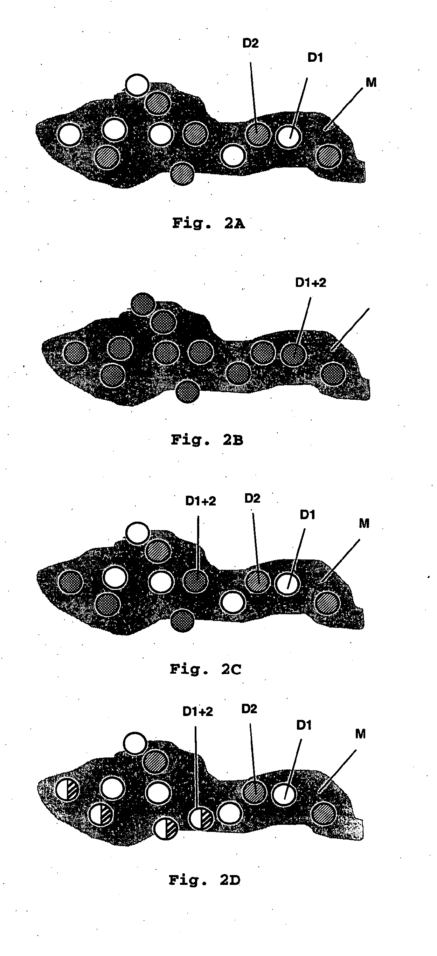

Ebenso kann es im Sinne der Erfindung vorteilhaft sein, wenn die Domänen zu einem Anteil von wenigstens 80%, bevorzugt von mehr als 90%, eine Mischmetalloxid-Struktur aufweisen. Solche Strukturen sind in Fig. 2C oder 2D gezeigt. Bei solchen Strukturen können sich besonders vorteilhafte Wechselwirkungen zwischen den Metalloxiden der Domänen ergeben.

Ein weiterer Gegenstand ist ein Verfahren zur Herstellung des erfindungsgemäßen Komposit-Pulvers, welches dadurch gekennzeichnet ist, dass die Precursoren der Oxide der Matrix und der Domänen, entsprechend dem später gewünschten Verhältnis der Metalloxide, mit einem Gasgemisch enthaltend ein Brenngas und Sauerstoff vermischt und in einem Reaktor, bestehend aus einer Verbrennungszone und einer Reaktionszone zur Reaktion bringt, die heißen Gase und das feste Produkte kühlt und anschliessend von den Gasen abtrennt.

Als Precursoren eignen sich alle Verbindungen, die unter den Bedingungen des erfindungsgemäßen Verfahrens oxidativ in ihre Oxide überführt werden können. Ausnahmen hiervon sind Edelmetallverbindungen, die bei der Verwendung im erfindungsgemäßen Verfahren in die Edelmetalle überführt werden.

Geeignete Brenngase können Wasserstoff, Methan, Ethan, Propan, Butan, Erdgas oder Gemische der vorgenannten Verbindungen sein, wobei Wasserstoff bevorzugt ist.

Sauerstoff wird bevorzugt in Form von Luft oder von mit Sauerstoff angereicherter Luft eingesetzt.

Das durch das erfindungsgemäße Verfahren erhaltene Produkt kann gegebenenfalls nach der Abtrennung der Gase durch einer Wärmebehandlung mittels Wasserdampf angefeuchteter Gase gereinigt werden.

Die Precursoren der Oxide können in Form von Aerosolen und/oder als Dampf dem Reaktor zugeführt werden.

Im Falle, dass die Precursoren der Oxide in Form von Aerosolen dem Reaktor zugeführt werden, können diese getrennt oder zusammen erzeugt werden.

Die Aerosole können aus Flüssigkeiten, Dispersionen, Emulsionen und/oder pulvrigen Feststoffen in einer Gasatmosphäre der Precursoren erhalten und durch Ultraschallvernebelung, Ein- oder Mehrstoffdüsen erzeugt werden. Gewöhnlich werden die Precursoren in Form wässeriger, organischer oder wässerig-organischer Lösungen eingesetzt. Es ist zum Beispiel aber auch möglich ein Aerosol in Form von metallischem Zink einzusetzen.

Neben Aerosolen können die Precursoren auch in Form von Dämpfen dem Reaktor zugeführt werden. Dabei können die Dämpfe getrennt oder zusammen erzeugt werden.

Sowohl die Dämpfe wie auch die Aerosole können zusätzlich an einer oder mehreren Stellen innerhalb des Reaktors zugeführt werden.

Die Precursoren können sowohl Salze wie auch metallorganische Verbindungen sein, welche die Metallkomponente des gewünschten Metalloxides tragen. Auch die Metalle selbst, wie beispielsweise Zink, können eingesetzt werden.

Geeignete Precursoren können Metallpulver, anorganische Salze wie Carbonate, Nitrate, Chloride, Nitride, Nitrite, Hydride, Hydroxide oder Organische Verbindungen mit Metallen wie Silane, Silikone, Alkoxyverbindungen, Salze organischer Säuren, Organische Komplexe, Alkylverbindungen von Precursoren Halogenide, Nitrate, metallorganische Verbindungen und/oder die Metallpulver von Li, Na, K, Rb, Cs, Be, Mg, Ca, Sr, Ba, Sc, Y, La, Ce, Pr, Nd, Sm, Eu, Gd, Tb, Ti, Zr, Hf, V, Nb, Ta, Cr, Mo, W, Mn, Fe, Co, Ni, Cu, Ag, Zn, Cd, Hg, B, Al, Ga, In, Te, Se, Tl, Si, Ge, Sn, Pb, P, As, Sb, Bi, Au, Pt, Rh, Pd, Ru, Ir, Hg, Os, Re sein.

Besonders bevorzugt können Nitrate, Chloride, Alkoxyverbindungen und Salze organischer Säuren eingesetzt werden.

Das erfindungsgemäße Verfahren kann auch eine Nachbehandlung in einer reduzierenden Atmosphäre umfassen. Diese Nachbehandlung kann sich unmittelbar an die Verbrennung ohne Isolierung des Pulvers anschließen oder sie erfolgt nach Isolierung und gegebenenfalls Reinigung des Pulvers. Die reduzierende Atmosphäre kann Wasserstoff, Formiergas oder Ammoniak sein, wobei Wasserstoff bevorzugt ist. Die Nachbehandlung wird gewöhnlich bei Temperaturen zwischen 20 und 1200°C und Atmosphärendruck durchgeführt. Hierdurch können erfindungsgemäße Pulver mit einem geringerem als dem stöchiometrischen Wert an Sauerstoff erhalten werden.

Das erfindungsgemäße Kompositpulver weist Domänen von nanoskaligen mehrkomponentigen Metalloxiden und/ oder Edelmetallen in einem oxidischen Material auf. Dies führt zu Eigenschaftskombinationen des Kompositmaterials, die mit Reinstoffen oder physikalischen Mischungen entsprechender Nanopartikel nicht erreicht werden können.

Ein weiterer Gegenstand der Erfindung ist die Verwendung des erfindungsgemäßen Komposit-Pulvers zur Herstellung von Keramik, als Werkstoff für magnetische, elektronische oder optische Anwendungen, in Datenspeichern, als Kontrastmittel in bildgebenden Verfahren, zum Polieren von Glas- und Metalloberflächen, als Katalysator oder Katalysatorträger, als funktionsgebender Füllstoff, als Verdickungsmittel, als Fließhilfsmittel, als Dispergierhilfsmittel, als Ferrofluid, als Pigment und als Beschichtungsmaterial.

### Beispiele

### Beispiel 1: Indium-Zinn-Oxid in einer Siliciumdioxidmatrix

0,51 kg/h des Matrix-Precursors SiCl₄ werden bei ca. 200°C verdampft und mit 3,8 Nm³/h Wasserstoff sowie 16,4 Nm³/h Luft und 1 Nm³/h Stickstoff in den Reaktor eingespeist.

Zusätzlich wird ein Aerosol bestehend aus den Domänenprecursoren, das aus einer wässerigen Indium(III)chlorid und Zinn(IV)chloridlösung mittels einer Zweistoffdüse, erhalten wird, mittels eines Traggases (3 Nm³/h Stickstoff) in den Reaktor eingebracht. Die wässerige Lösung enthält 10,98 Gew.-% InCl₃ und 0,66 Gew.-% SnCl₄.

Das homogen gemischte Gas-Aerosol-Gemisch strömt in den Reaktor und verbrennt dort bei einer adiabaten Verbrennungstemperatur von etwa 1200°C und einer Verweilzeit von etwa 50 msec.

Die Verweilzeit errechnet sich aus dem Quotienten des durchströmten Anlagenvolumens und des Betriebsvolumenstroms der Prozessgase bei adiabater Verbrennungstemperatur.

Nach der Flammenhydrolyse werden in bekannter Art die Reaktionsgase und das entstandene mit Indium-Zinn-Oxid dotierte Siliciumdioxid-Pulver abgekühlt und mittels eines Filter wird der Feststoff von dem Abgasstrom abgetrennt.

In einem weiteren Schritt werden durch Behandlung mit wasserdampfhaltigem Stickstoff noch anhaftende Salzsäurereste vom Pulver entfernt.

Die Beispiele 2 bis 4 werden analog Beispiel 1 durchgeführt. In Beispiel 2 werden die gleichen Precursoren wie in Beispiele 1 eingesetzt, jedoch in anderen Verhältnissen. In Beispiel 3 werden als Domänenprecursoren Eisenchlorid und Zinkchlorid in Lösung und als Matrix-Precursor Siliciumtetrachlorid als Dampf eingesetzt. In Beispiel 4 werden drei Domänenprecursoren, Eisen-, Zinkund Nickelchlorid als Lösung und als Matrix-Precursor Titantetrachlorid als Dampf eingesetzt. In Beispiel 5 werden als Domänenprecursoren Zinknitrat und Palladiumnitrat und als Matrix-Precursor Aluminiumnitrat in wässriger Lösung eingesetzt und als Aerosol mittels Ultraschallvernebelung mittels Traggases in den Reaktor eingebracht. Beispiel 6 wird analog zu Beispiel 5 durchgeführt. In Beispiel 6 werden als Domänenprecursoren Cer(III)nitrat und Palladiumnitrat und als Matrix-Precursor Zirkonylnitrat in wässriger Lösung eingesetzt. In den Beispielen 7 und 8 wird als Matrixprecursor Siliciumtetrachlorid und als Matrixprecursoren Eisen- und Manganchlorid, in Beispiel 8 zusätzlich Zinkchlorid, eingesetzt.

Die Einsatzstoffe und die Reaktionsparameter sind Tab. 1, die analytischen Daten der resultierenden Pulver sind Tab. 2 zu entnehmen.

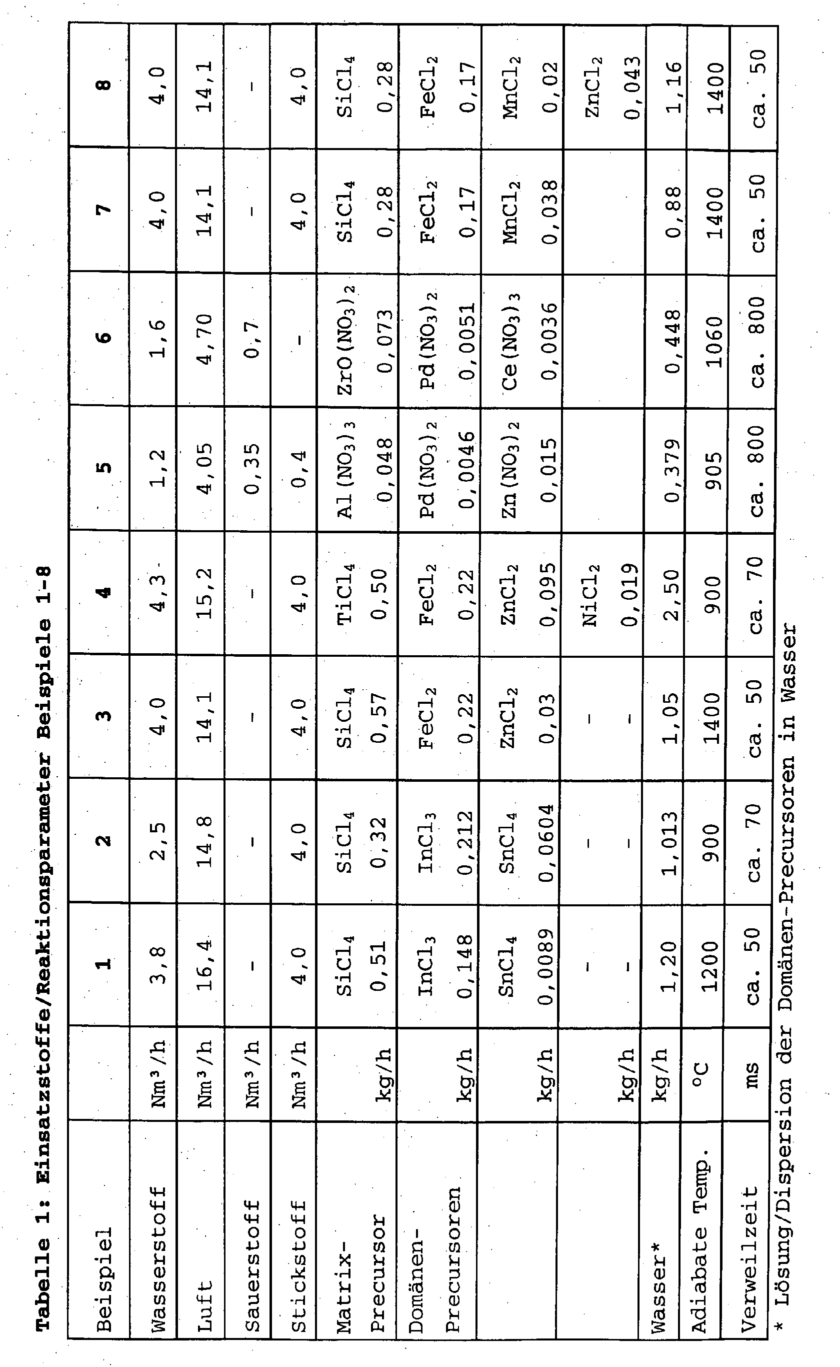

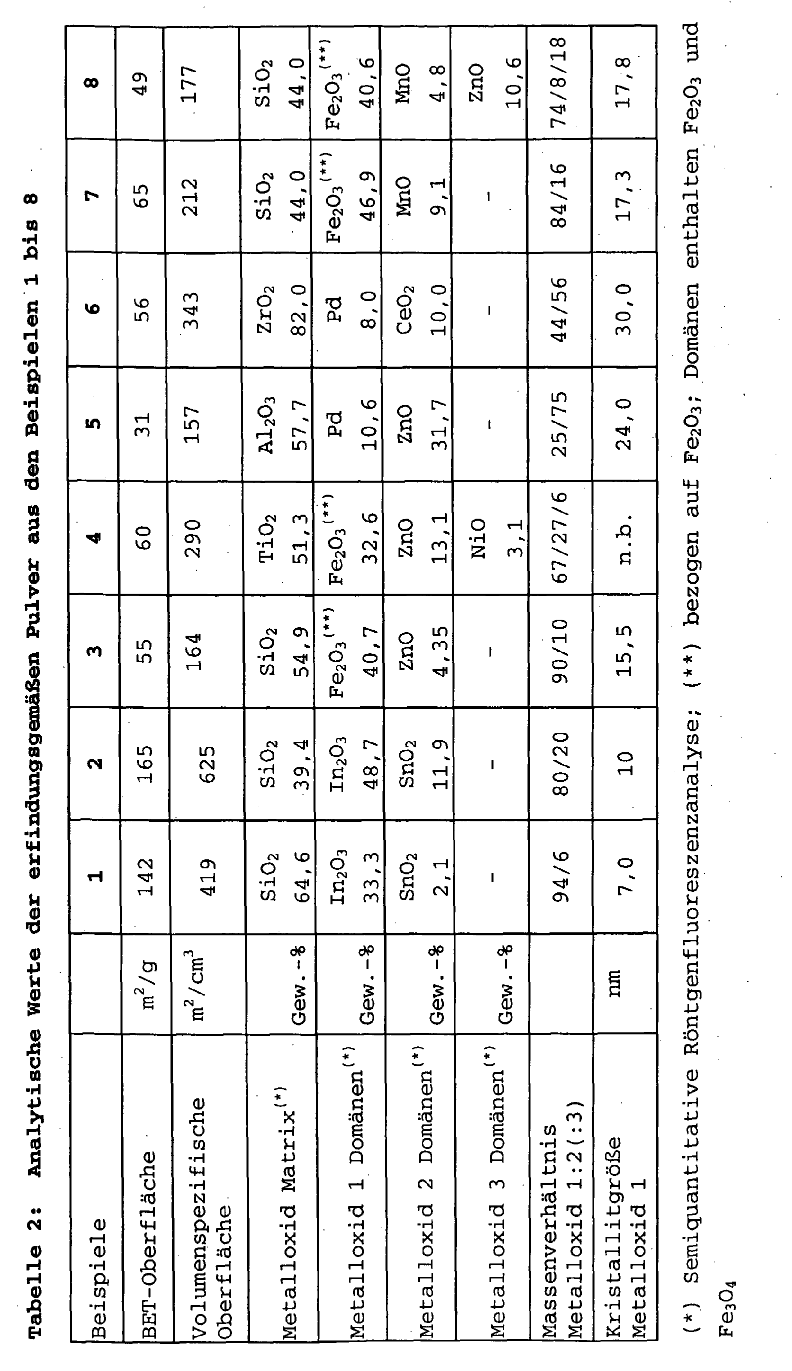

### TEM-Aufnahmen

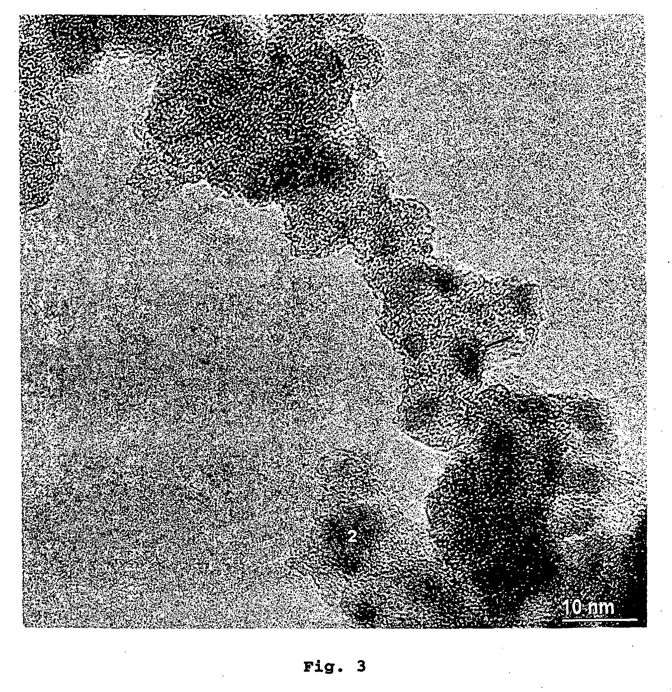

Die TEM-Aufnahmen der Partikel aus den Beispiel 1 und 2 zeigen eine amorphe Siliciumdioxidmatrix, in die Indium-Zinn-Oxid-Kristalle mit einer Kristallgröße von 5 bis 15 nm eingebettet sind. Fig. 3 zeigt eine TEM-Aufnahme des Pulvers aus Beispiel 1. Dabei ist Indium-Zinn-Oxid dunkel dargestellt.

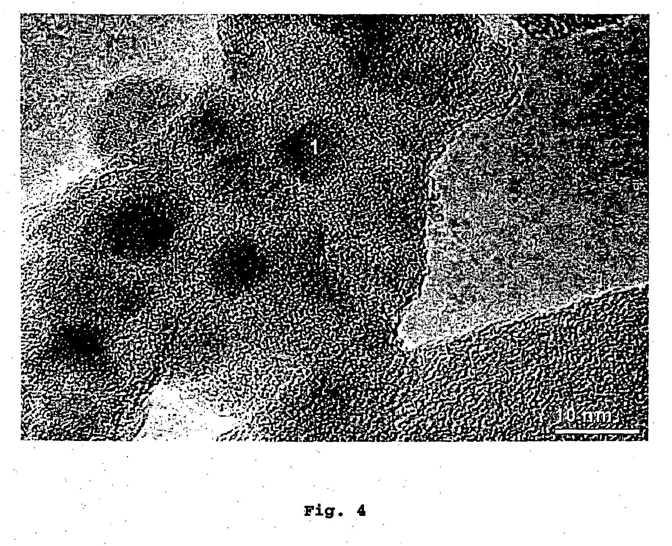

Die TEM-Aufnahme der Pulver aus Beispiel 3 zeigt eine amorphe Siliciumdioxidmatrix, in die Eisen-zink-Oxid-Kristalle mit einer Kristallgröße von 5 - 30 nm eingebettet sind (Fig. 4).

### Energiedispersive Röntgenanalyse (EDX)

Die EDX-Spektren des Pulvers aus Beispiel 1 zeigen, daß die dunklen Kristalle ausschließlich Indium- und Zinn-Atome enthalten.

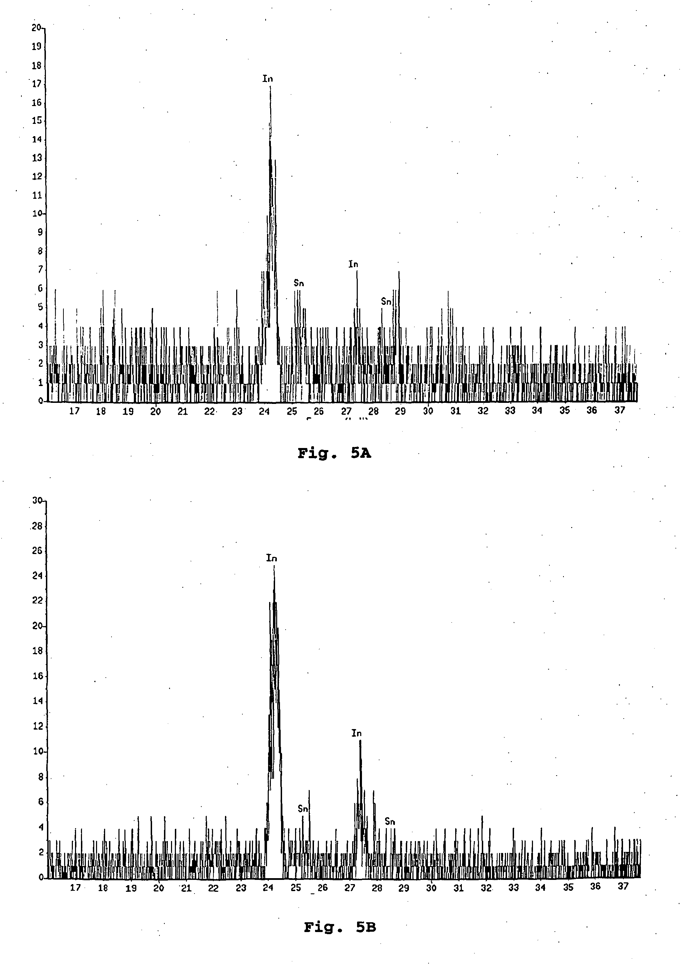

Fig. 5A zeigt ein EDX-Spektrum einer Domäne aus Beispiel 1. Die Umrechnung des Atommassenverhältnisses Indium/Zinn von 94,6:5,4 auf die entsprechenden Oxide ergibt ein Massenverhältnis von Indiumoxid/Zinnoxid von 94,3:5,7. Dies stimmt gut mit dem Summenwert aus der Röntgenfluoreszenzanalyse von Indiumoxid/Zinnoxid 94,0:6,0 überein.

Fig. 5B zeigt ein EDX-Spektrum einer weiteren Domäne aus Beispiel 1. Das Atommassenverhältnis Indium/ Zinn von 99,5:0,5 zeigt, dass diese Domäne fast ausschließlich aus Indiumoxid besteht.

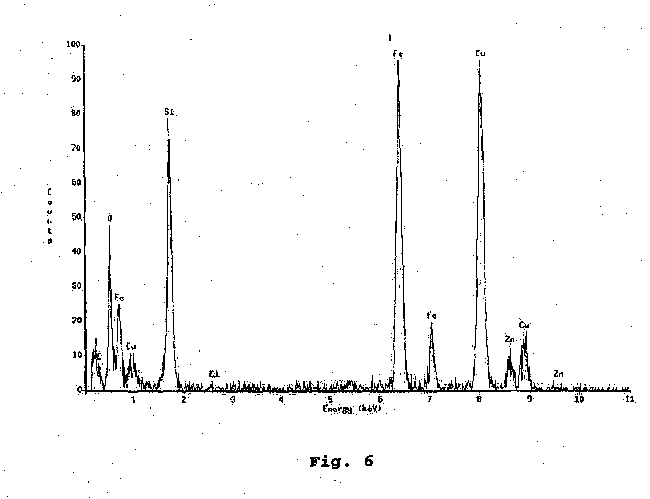

Fig. 6 zeigt das EDX-Spektrums des Pulvers aus Beispiel 3.

### Röntgendiffraktogramme (XRD)

Die XRD-Spektren der Partikel aus den Beispielen 1 und 2 zeigen ein deutliches Signal bei etwa 2theta = 30,6°. Dies entspricht der Signallinie von Indiumoxid (In₂O₃).

Die XRD-Spektren der Partikel aus Beispielen 3 zeigen ein deutliches Signal bei etwa 2theta = 41,5°. Dies entspricht den Signallinien von Magnetit (Fe₃O₄) und Maghemit (gamma-Fe₂O₃, γ-Fe₂O₃).

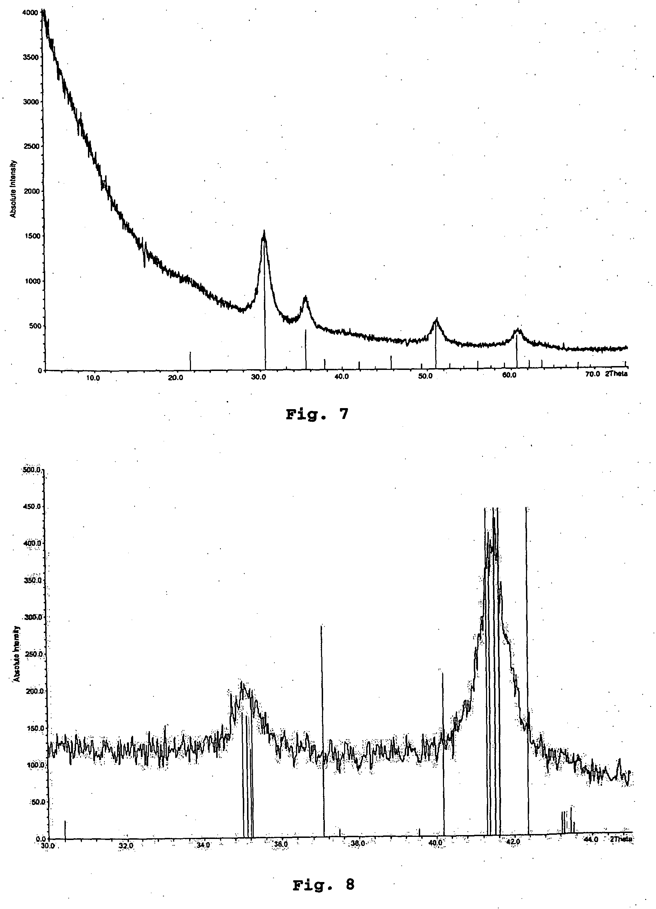

Das Grundrauschen der Signale in den Beispielen 1 bis 3 durch das amorphe Siliciumdioxid hervorgerufen. Fig. 7 zeigt das Röntgendiffraktogramm der Partikel aus Beispiel 1.

Die Abschätzung nach Debye-Scherrer ergibt eine mittlere Indiumoxid-Kristallitgröße für das Pulver aus Beispiel 1 von 7,0 nm, aus Beispiel 2 von 10,2 nm und eine mittlere Eisenoxid-Kristallitgröße für das Pulver aus Beispiel 3 von 15,5 nm. Fig. 8 zeigt das Röntgendiffraktogramm der Partikel aus Beispiel 3.

### Absenkung der Curie-Temperatur

Die Beispiele 7 und 8 belegen eindrucksvoll die Wechselwirkung innerhalb einer Domäne. So liegt die Curie-Temperatur von Eisenoxid bei ca. 590°C. Das Pulver des Beispieles 7 zeigt eine Curie-Temperatur von nur ca. 490°C, das des Beispieles 8 eine von nur ca. 430°C.

Dies ist wahrscheinlich darauf zurückzuführen, dass ein Großteil (größer 90%) der Domänen der Pulver der Beispiele 7 und 8 in einer ferritischen Struktur vorliegen. Die XRD-Spektren der Pulver zeigen keine Signale eines Manganoxides oder eines Zinkoxides.

Gleiches gilt auch für die Pulver der Beispiele 1 und 2. Dort weist der Großteil (größer 90%) der Domänen eine Indium-Zinn-Mischmetalloxid-Struktur auf. Dies kann beispielsweise durch HR-TEM in Kombination mit EDX-Techniken ermittelt werden.

Die Domänen der erfindungsgemäßen Pulver liegen demnach zu einem überwiegenden Teil, der in der Regel höher als 80 ist, in einer Form vor, welche am ehesten den Anordnungen in Fig. 2C und 2D entspricht.

## Patentansprüche

1. Komposit-Pulver mit einer Matrix-Domänenstruktur,
**dadurch gekennzeichnet, dass**
die Matrix ein Metalloxid ist und in Form von dreidimensionalen Aggregaten, die mindestens in einer Dimension einen Durchmesser von nicht mehr als 250 nm aufweisen, vorliegt,
- die Domänen aus Metalloxiden und/oder Edelmetallen in der Matrix eines einzelnen Metalloxides bestehen, wobei die Domänen aus
- wenigstens zwei Metalloxiden oder
- wenigstens zwei Edelmetallen oder
- einem Gemisch aus mindestens einem Metalloxid und mindestens einem Edelmetall bestehen, und
- nanoskalig sind, und wobei
das Kompositpulver eine volumenspezifische
Oberfläche von 60 bis 1200 m²/cm³ aufweist.

2. Komposit-Pulver mit einer Matrix-Domänenstruktur nach Anspruch 1, **dadurch gekennzeichnet, dass** eine einzelne Domäne ein oder mehrere Metalloxide und/ oder Edelmetalle enthält.

3. Komposit-Pulver mit einer Matrix-Domänenstruktur nach den Ansprüchen 1 oder 2, **dadurch gekennzeichnet, dass** die Matrix und die Domänen amorph oder kristallin vorliegen.

4. Komposit-Pulver mit einer Matrix-Domänenstruktur nach den Ansprüchen 1 bis 3, **dadurch gekennzeichnet, dass** die Domänen von der Matrix umschlossen sind.

5. Komposit-Pulver mit einer Matrix-Domänenstruktur nach den Ansprüchen 1 bis 4, **dadurch gekennzeichnet, dass** das Verhältnis, bezogen auf das Gewicht, der Summe der Domänen zur Matrix zwischen 1:99 und 90:10 beträgt.

6. Komposit-Pulver mit einer Matrix-Domänenstruktur nach den Ansprüchen 1 bis 5, **dadurch gekennzeichnet, dass** die Oxide der Matrix und der Domänen die Oxide von Li, Na, K, Rb, Cs, Be, Mg, Ca, Sr, Ba, Sc, Y, La, Ce, Pr, Nd, Sm, Eu, Gd, Tb, Ti, Zr, Hf, V, Nb, Ta, Cr, Mo, W, Mn, Fe, Co, Ni, Cu, Ag, Zn, Cd, Hg, B, Al, Ga, In, Te, Se, Tl, Si, Ge, Sn, Pb, P, As, Sb oder Bi umfassen.

7. Komposit-Pulver mit einer Matrix-Domänenstruktur nach den Ansprüchen 1 bis 6, **dadurch gekennzeichnet, dass** die Domänen die Edelmetalle Au, Pt, Rh, Pd, Ru, Ir, Ag, Hg, Os oder Re umfassen.

8. Kompositpulver mit einer Matrix-Domänenstruktur nach Anspruch 1, **dadurch gekennzeichnet, dass**
- die Matrix aus Siliciumdioxid ist und
- die Domänen aus Indiumoxid, Zinnoxid und/oder Mischmetalloxidformen von Indium und Zinn bestehen,
- wobei der Anteil an Indiumoxid, gerechnet als In₂O₃ und bezogen auf die Summe von Indiumoxid und Zinnoxid, gerechnet als SnO₂, von 80 bis 98 Gew.-%, und
- der Anteil an Siliciumdioxid bezogen auf die Summe aus Siliciumdioxid + Indiumoxid + Zinnoxid 10 bis 99 Gew.-% beträgt.

9. Kompositpulver mit einer Matrix-Domänenstruktur nach Anspruch 1, **dadurch gekennzeichnet, dass**
- die Matrix aus Siliciumdioxid ist und
- die Domänen aus Manganoxid, Eisenoxid und/oder Mischmetalloxidformen von Eisen/Mangan bestehen,
- wobei der Anteil an Eisenoxid, gerechnet als Fe₂O₃ und bezogen auf die Summe von Eisenoxid und Manganoxid, grechnet als MnO, 36 bis 99 Gew.-% beträgt, und
- der Anteil an Siliciumdioxid, bezogen auf die Summe aus Siliciumdioxid + Eisenoxid + Manganoxid, 10 bis 99 Gew.-% beträgt.

10. Kompositpulver mit einer Matrix-Domänenstruktur nach Anspruch 1, **dadurch gekennzeichnet, dass**
- die Matrix Siliciumdioxid ist,
- die Domänen aus Manganoxid, Eisenoxid, Zinkoxid und/oder Mischmetalloxidformen von Eisen/Mangan oder Eisen/Zink oder Mangan/Zink bestehen, wobei
- mit einem Anteil an
Eisenoxid, gerechnet als Fe₂O₃, von 32 bis 98 Gew.-% Manganoxid, gerechnet als MnO, von 1 bis 64 Gew.-% Zinkoxid, gerechnet als ZnO, 1 bis 67 Gew.-%, jeweils bezogen auf die Summe von Eisenoxid, Manganoxid und Zinkoxid, und
- der Anteil an Siliciumdioxid, bezogen auf die Summe aus Siliciumdioxid + Eisenoxid + Manganoxid + Zinkoxid, 10 bis 99 Gew.-% beträgt.

11. Kompositpulver mit einer Matrix-Domänenstruktur nach den Ansprüchen 1 bis 10, **dadurch gekennzeichnet, dass** die Domänen zu einem Anteil von wenigstens 80% eine Mischmetalloxid-Struktur aufweisen.

12. Verfahren zur Herstellung des Komposit-Pulvers gemäß den Ansprüchen 1 bis 11, **dadurch gekennzeichnet, dass** die Precursoren der Oxide der Matrix und der Domänen, entsprechend dem später gewünschten Verhältnis der Metalloxide, mit einem Gasgemisch enthaltend ein Brenngas und Sauerstoff vermischt und in einem Reaktor, bestehend aus einer Verbrennungszone und einer Reaktionszone zur Reaktion bringt, die heißen Gase und das feste Produkte kühlt und anschliessend von den Gasen abtrennt.

13. Verfahren nach Anspruch 12, **dadurch gekennzeichnet, dass** das Produkt nach der Abtrennung der Gase zur Reinigung einer Wärmebehandlung mittels Wasserdampf angefeuchteter Gase unterzogen wird.

14. Verfahren nach den Ansprüchen 12 oder 13, **dadurch gekennzeichnet, dass** die Precursoren in Form von Aerosolen und/oder als Dampf dem Reaktor zugeführt werden.

15. Verfahren nach Anspruch 14, **dadurch gekennzeichnet, dass** die Aerosole der Precursoren getrennt oder zusammen erzeugt werden.

16. Verfahren nach Anspruch 15, **dadurch gekennzeichnet, dass** die Aerosole der Precursoren aus Flüssigkeiten, Dispersionen, Emulsionen und/oder pulvrigen Feststoffen in einer Gasatmosphäre erhalten werden.

17. Verfahren nach den Ansprüchen 15 oder 16, **dadurch gekennzeichnet, dass** die Aerosole durch Ultraschallvernebelung oder Ein- oder Mehrstoffdüsen erzeugt werden.

18. Verfahren nach Anspruch 14, **dadurch gekennzeichnet, dass** die Dämpfe der Precursoren getrennt oder zusammen erzeugt werden.

19. Verfahren nach den Ansprüchen 12 bis 18, **dadurch gekennzeichnet, dass** die Aerosole und/oder Dämpfe zusätzlich an einer oder mehreren Stellen dem Reaktor zugeführt werden.

20. Verfahren nach den Ansprüchen 12 bis 19, **dadurch gekennzeichnet, dass** die Precursoren Halogenide, Nitrate, metallorganische Verbindungen und/oder die Metallpulver von Li, Na, K, Rb, Cs, Be, Mg, Ca, Sr, Ba, Sc, Y, La, Ce, Pr, Nd, Sm, Eu, Gd, Tb, Ti, Zr, Hf, V, Nb, Ta, Cr, Mo, W, Mn, Fe, Co, Ni, Cu, Ag, Zn, Cd, Hg, B, Al, Ga, In, Te, Se, Tl, Si, Ge, Sn, Pb, P, As, Sb, Bi, Au, Pt, Rh, Pd, Ru, Ir, Hg, Os oder Re sind.

21. Verfahren nach den Ansprüchen 12 bis 20, **dadurch gekennzeichnet, dass** man das Produkt vor oder nach der Reinigung in einer reduzierenden Atmosphäre behandelt.

22. Verwendung des Komposit-Pulvers gemäß der Ansprüche 1 bis 11 zur Herstellung von Keramik, als Werkstoff für magnetische, elektronische oder optische Anwendungen, in Datenspeichern, als Kontrastmittel in bildgebenden Verfahren, zum Polieren von Glas- und Metalloberflächen, als Katalysator oder Katalysatorträger, als funktionsgebender Füllstoff, als Verdickungsmittel, als Fließhilfsmittel, als Dispergierhilfsmittel, als Ferrofluid, als Pigment oder als Beschichtungsmaterial.
